# EUROPEAN PATENT SPECIFICATION

(11) **EP 3 959 488 B1**
(45) Date of publication and mention of the grant of the patent: **28.02.2024**
(21) Application number: 19719496.2
(22) Date of filing: 23.04.2019
(51) Int. Cl.: G01F 23/14, G01F 23/284, G01F 23/296, G01S 13/88, G01S 15/88, F16L 23/00, F16L 23/08, F16L 23/12, F16L 41/00

(54) **HYGIENIC TANK SEAL**
HYGIENISCHE TANKDICHTUNG
JOINT D'ÉTANCHÉITÉ DE RÉSERVOIR HYGIÉNIQUE

(43) Date of publication of application: 02.03.2022
(73) Proprietor: Rosemount Tank Radar AB, 435 23 Mölnlycke (SE)
(72) Inventor: FREDRIKSSON, Håkan, 589 51 LINKÖPING (SE); LINDBLAD, Björn, 415 07 GÖTEBORG (SE)
(74) Representative: AWA Sweden AB
(86) International application number: PCT/EP2019/060371
(87) International publication number: WO 2020/216435

(56) References cited:
- US-A- 5 904 382
- US-A1- 2003 030 517
- US-A1- 2014 103 950
- US-A1- 2014 375 051
- US-A1- 2017 141 474
- US-B1- 6 386 055

## Description

### Field of the invention

The present invention relates to a hygienic tank seal of a radar level gauge (RLG) mounted to a tank nozzle. The tank seal includes an sealing gasket and a tri-clamp (also referred to as tri-clover).

### Background of the invention

A radar level gauge (RLG) is suitably used for making measurements of a filling level of products such as process fluids, granular compounds and other materials contained in a tank, e.g. process tanks. In some applications, it is required to provide satisfactory sealing of the tank on which the RLG is mounted. Such sealing is typically referred to as a "process seal". The process seal can be provided by an annular sealing element, sometimes referred to as a gasket, sandwiched between the instrument and an annular opening on which the instrument is mounted (e.g. a tank nozzle).

In some cases, the RLG is mounted to a tank nozzle by means of an annular coupling device, such as a tri-clamp. US patent 6,658,932 discloses a non-contact (free propagating) radar level gauge mounted with a tri-clamp, where a PTFE process seal is fitted between the tank opening and the gauge housing. The PTFE process seal is transmissive to the radar signals.

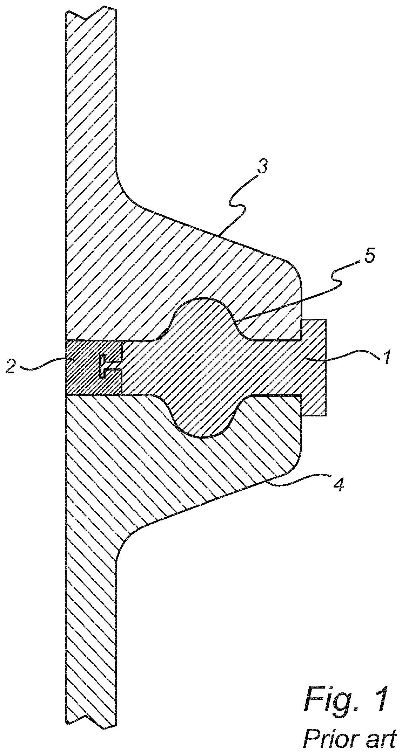

In some applications, such as in the food industry, any equipment that is brought into contact with the process needs to comply with health regulations, such as EHEDG (European Hygienic Engineering & Design Group). Today, the only tri-clamp attachment of a radar level gauge which is EHEDG approved uses a Combifit^{®} ring, as illustrated in figure 1. A Combifit^{®} ring comprises a metal ring 1 and a rubber gasket 2 attached on the inside of the metal ring 1. The Combifit^{®} ring is sandwiched between the tri-clamp flange 3 of the housing of the RLG, and the tri-clamp flange 4 of the tank nozzle. Opposing protrusions 5 on the metal ring 1 are received by the grooves in each tri-clamp flange, thereby mechanically securing a radial and axial position of the housing with respect to the nozzle.

For several reasons, it would be desirable to provide an alternative tank seal. One reason is that the Combifit^{®} ring requires a fit of two curved interfaces (where the protrusions 5 fit into the grooves of the flanges on each side of the ring). This means that the tolerance of the axial fit will be determined by three different tolerances (the ring as well as the two flanges).

In order to obtain EHEDG approval, such an alternative tank seal must ensure a metal-to-metal axial and radial positioning, and adequate sealing of the tank.

US2003030517A1 discloses a measuring device for determining the level of material in a container including a process seal comprising: a substantially conical portion including a narrow end and a wide end, the conical portion terminating at the wide end in a substantially cylindrical outer surface; and a flange portion extending outwardly from the substantially cylindrical outer surface.

### General disclosure of the invention

It is an object of the present invention to provide such an alternative tank seal.

This and other objects are achieved by a gauging instrument adapted for mounting on a nozzle of a tank, the nozzle provided with a tri-clamp flange, the instrument comprising an attachment collar with an opening configured to be aligned with the nozzle and to be secured by means of an annular clamping device. The attachment collar includes an annular sealing surface, an annular abutment surface located radially (and axially) outside the sealing surface and configured to abut an outer periphery of the tank nozzle, and a ridge located radially outside the abutment surface. The gauging instrument further comprises a sealing gasket fitted radially inside the abutment surface, such that, when the gauging instrument is mounted on a tri-clamp flange of a tank nozzle, the ridge surrounds the outer periphery of the tri-clamp flange to thereby ensure radial alignment, the annular abutment surface abuts the periphery of the tank nozzle to ensure a precisely defined axial relation, and the sealing gasket is sandwiched between the sealing surface and the tri-clamp flange.

It is noted that a conventional tri-clamp connection is typically made in a pipe, where a product is intended to flow past the connection in one or two directions. In that case, the connection should be symmetrical, and is typically formed between two identical tri-clamp flanges (sometimes referred to as "ferrules"), each being provided with a groove for receiving a ring-shaped sealing gasket. Given these circumstances, conventional solutions for axial positioning and radial alignment have been based on a metal ring received by the two opposing grooves, as shown in figure 1.

Contrary to this conventional understanding, the present invention is based on the understanding that an interface between a gauging instrument and a tank nozzle will not be exposed to any flow of product. On the contrary, no tank content will typically reach the interface. Under these circumstances, the present inventors have realized that the gauge housing can be freely designed, and does not need to be shaped as a conventional tri-clamp flange.

The invention is therefore based on a mechanical redesign of the attachment collar of the radar level gauge. Instead of being formed as a conventional tri-clamp flange, the attachment collar has an annular abutment surface and a ridge radially outside and surrounding this abutment surface. The outer ridge surrounds the periphery of the tank nozzle to thereby ensure radial alignment, while the annular abutment surface abuts the periphery of the tank nozzle to ensure a precisely defined axial position of the tri-clamp flange with respect to the sealing surface. The sandwiching of the sealing gasket is thus done at a predefined gap between the sealing surface and the tri-camp flange of the nozzle.

With his design, alignment and sealing are accomplished without the need of a Combifit^{®} ring, leading to a more cost-efficient mounting.

The present invention also provides an improved tolerance chain in the axial direction compared to a conventional Combifit^{®} ring, as the axial position is only determined by the axial distance between the sealing surface and the abutment surface.

The annular clamp may be a tri-clamp, but may alternatively be some other type of annular clamping device which is configured to secure the attachment collar to the nozzle flange.

The nozzle flange may be provided with an annular groove facing away from the tank, and the sealing gasket may comprise an annular protrusion configured to be received in this groove. Such a groove typically forms part of a tri-clamp type connection. By protruding into the groove, the gasket can provide an improved sealing performance.

The sealing gasket is preferably made a of a soft sealing material with adequate hygienic properties, such as rubber or a softened plastic, e.g. PTFE. Such materials typically have a thermal expansion which is greater than metal. For this reason, a gap may be formed radially outside the sealing gasket (between the gasket and the surrounding wall of the attachment collar), to allow for thermal expansion of the gasket without impairing the sealing function.

The gauging instrument may be any type of instrument which suitably may be connected to a tri-clamp flange of a nozzle of a process tank, e.g. a pressure gauge or an ultrasonic gauge

According to a preferred embodiment, the gauging instrument is a radar level gauge and further comprises a transceiver configured to generate and transmit an electromagnetic transmit signal and to receive an electromagnetic return signal, a signal propagation device arranged to allow propagation of the electromagnetic transmit signal from the transceiver towards a surface of a product in the tank and arranged to provide the transceiver with a return signal resulting from reflection of the electromagnetic transmit signal at the surface; and processing circuitry connected to the transceiver for determining the filling level based on a relationship between the electromagnetic transmit signal and the electromagnetic return signal.

The signal propagation device may be a directional antenna, in which case the attachment collar may be formed by an opening of the antenna. The sealing gasket may then cover an entire cross section of the antenna opening, at least a central area of the sealing gasket being permeable to said electromagnetic transmit and return signals. The gasket is thus a disc with its perimeter sandwiched between to the flange of the nozzle and the attachment collar, thereby effectively sealing the tank.

Alternatively, the signal propagation device is a guided wave probe. In this case, the sealing gasket is annular, and has a central opening for electrical connection of the guided wave probe. The periphery of the annular gasket is also in this case sandwiched between the flange of the nozzle and the attachment collar. Further, the edge of the central opening is sealed against the probe.

In one embodiment, the instrument comprises a dielectric sleeve suspended in the attachment collar, and a probe connector suspended in said sleeve, wherein the probe connector extends through the annular sealing gasket. The guided wave probe is then connectable to the probe connector so as to sandwich an inner edge of the annular gasket between the dielectric sleeve and an end of the probe facing the gasket.

### Brief description of the drawings

The present invention will be described in more detail with reference to the appended drawings, showing currently preferred embodiments of the invention.
Figure 1 is a schematic view of a prior art tri-clamp sealing using a Combifit^{®} ring.
Figure 2 is a schematic view of a non-contact radar level gauge according to a first embodiment of the invention.
Figure 3 is a schematic view of a guided wave radar level gauge according to a second embodiment of the invention.
Figure 4 is a perspective view of a tri-clamp mounting of a radar level gauge.
Figure 5 is a cross section view of the tri-clamp mounting of the RLG in figure 2.
Figure 6 is a cross section view of the tri-clamp mounting of the RLG in figure 3.

### Detailed description of preferred embodiments

Embodiments of the present invention will herein be described with reference to a radar level gauge. However, it will be understood that the invention will be equally applicable also for other gauging instruments where an attachment collar is sealingly mounted on a tank nozzle by means of a clamping device. For example, the invention may be implemented in pressure gauges and ultrasonic gauges.

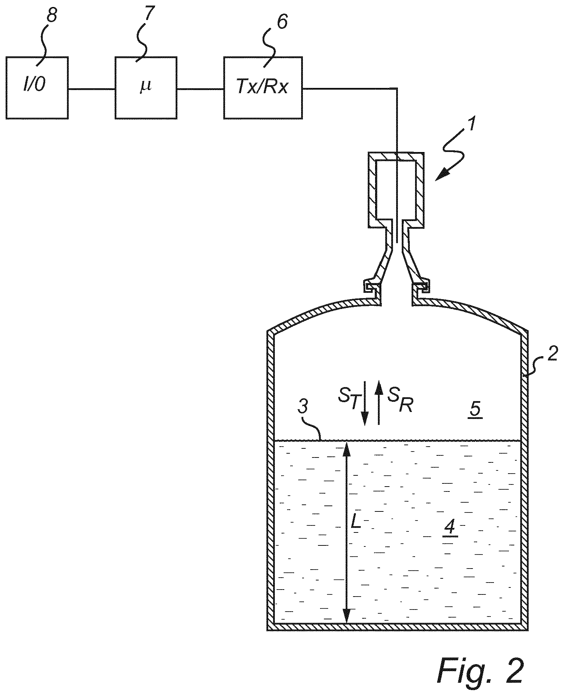

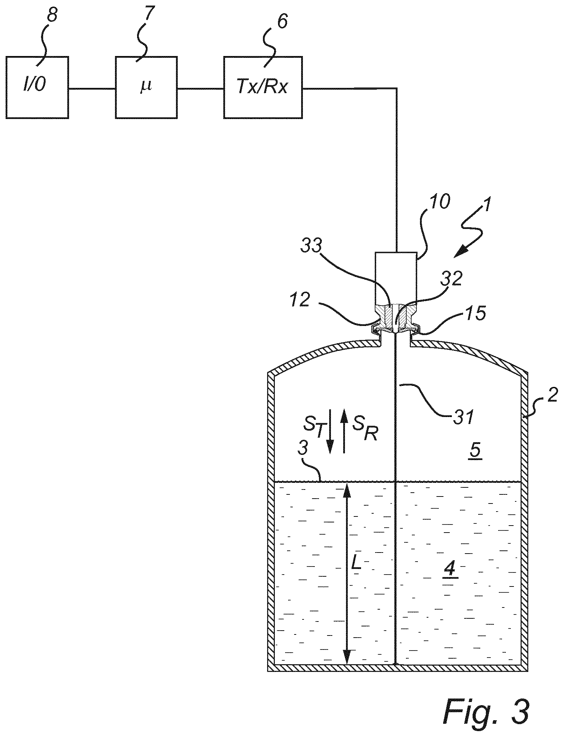

A radar level gauge (RLG) 1 according to an embodiment of the present invention is illustrated schematically in figures 2 and 3. The RLG 1 is here mounted on a hygienic tank 2, and arranged to perform measurements of a process variable such as the level L of an interface between two materials in the tank 2. Typically, the first material is a product 4 stored in the tank, e.g. a liquid such as milk, or a solid such as a granular compound, the second material is air or other atmosphere 5 in the tank, while the interface is the surface 3 of the product 4. In some applications, the tank is a very large metal tank (diameter in the order of ten meters).

The RLG 1 circuitry includes transceiver circuitry 6, processing circuitry 7 and an interface 8.

The transceiver circuitry 6 is configured to generate and transmit an electromagnetic (microwave) transmit signal S_{T} and receive an electromagnetic (microwave) return signal S_{R}. The transmit signals S_{T} are propagated towards the surface 3 of the product 4 by a signal propagation device; here an antenna 21 in figure 2 or a guided wave probe 31 in figure 3. The electromagnetic return signals S_{R} are caused by a reflection in the surface 3, and are returned by the signal propagation device and fed back to the transceiver 6. The transceiver circuitry 6 may be one functional unit capable of transmitting and receiving electromagnetic signals, or may be a system comprising separate transmitter and receiver units. The elements of the transceiver circuitry 6 are typically implemented in hardware, and form part of an integrated unit normally referred to as a microwave unit. For simplicity, the transceiver circuitry is referred to as the "transceiver" in the following description.

The processing circuitry 7 may include a combination of analogue processing embodied in hardware, and digital processing embodied by software modules stored in a memory and executed by an embedded processor. The invention is not restricted to the particular realization, and any implementation found suitable to realize the herein described functionality may be contemplated.

The processing circuitry 7 is configured to determine the distance between a reference position at the top of the tank (such as the passage between the outside and the inside of the tank) and the surface 3 by processing the transmit signal S_{T} and the return signal S_{R}. The processing typically includes generation of a tank signal or "echo curve", including a plurality of peaks representing echoes from the interior of said tank. One of the peaks represent an echo from the surface 3. Based on the determined distance to the surface 3, generally referred to as ullage, and known dimensions of the tank 2, a process variable such as the filling level L of the tank can be determined.

The interface 8 is configured to allow communication of a measurement value externally of the RLG and optionally for power supply of the RLG. For example, the interface 8 may be a two-wire control loop 9, such as a 4-20 mA loop. The interface 8 may also include a serial data bus, allowing communication using a digital communication protocol. Examples of available digital protocols include HART, Modbus, Profibus and Foundation Fieldbus. The interface 8 may also be a wireless interface, employing e.g. wireless HART, in which case the RLG is provided with some sort of internal energy store, such as a battery, possibly solar powered.

The transmit signal is here a high frequency signal, with an operating frequency range greater than 1 GHz.

According to one measuring principle, the transmit signal is a continuous signal with varying frequency (frequency modulated continuous wave, FMCW). An FMCW based RLG will emit a radar sweep with gradually varying frequency, and mix the received signal with the original signal (homodyne mixing) to form a frequency domain tank signal. Typically, the operating frequency range of a FMCW radar is centered around 6 GHz or 26 GHz, with a band-width of one or several GHz.

According to another measurement principle, the transmit signal is a train of distinct pulses with a duration in the order of ns and a repetition frequency in the order of MHz. The return signal is sampled with the original pulse train in a sample and hold circuit in a process known as time domain reflectometry (TDR), thereby forming a time domain tank signal. When time domain reflectometry is used in a NCR level gauge, the pulses need to be high frequency modulated to allow emission with the directional antenna.

The transmit signal may also be some combination of FMCW and a pulsed signal. For example, a principle known as multiple frequency pulsed wave (MFPW) has been proposed.

The circuitry 6, 7, 8 is housed in a housing, sometimes referred to as a measurement unit (MU) 10. The measurement unit (MU) 10 is mounted on a tank connection, here an annular attachment collar 12, made of a metal material, typically steel, which is adapted to be securely fitted with an annular clamping device 15, here a tri-clamp, to a nozzle 13 of the tank 2. The attachment collar 12 is adapted to provide a passage (preferably pressure sealed) for electromagnetic signals through the roof of the tank, which passage connects the transceiver circuitry 6 with a signal propagation device.

In figure 2, the propagation device is a directional antenna in the form of an antenna horn 21 formed by the tank connection. The antenna 21 is arranged to act as an adapter, transmitting free propagating electromagnetic waves into the tank 2 to be reflected by the interface, here the surface 3 of the product 4 in the tank 2. A return signal caused by the reflection will be received by the antenna and be coupled back to the transceiver. An RLG with a directional antenna is often referred to as a non-contact radar (NCR) level gauge.

In figure 3, the RLG 1 is a guided waver radar (GWR), and the signal propagating device is a probe 31 extending from the RLG 1 to the bottom of the tank 2. The probe 31 can be e.g. a coaxial wire probe, a twin wire probe, or a single wire probe (also referred to as a surface wave guide). Electromagnetic waves transmitted along the probe 31 will be reflected by any interface 3 between materials in the tank, and the reflection will be transmitted back to the transceiver 6.

The probe 31 is attached to a coaxial probe connection comprising a central probe connector 32 suspended by a dielectric sleeve 33 arranged in a neck of the housing 10.

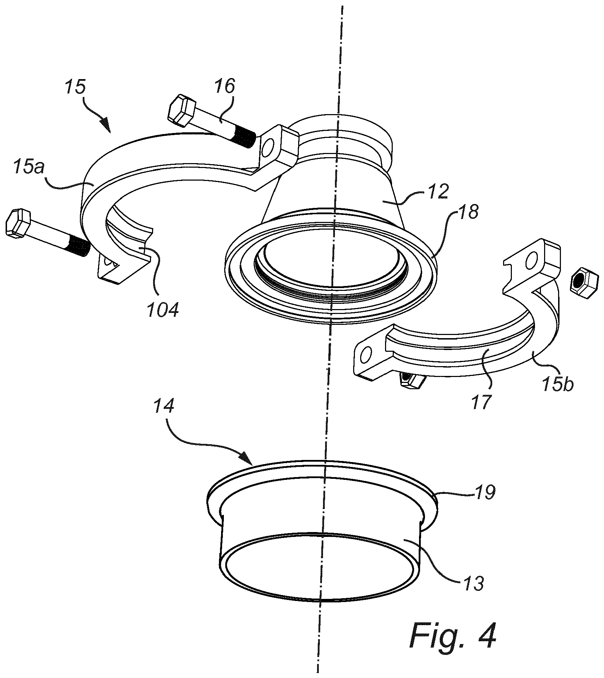

Figure 4 shows in perspective view in more detail how the annular clamp 15 secures the RLG 1 to a tank nozzle 13 here with a tri-clamp type flange 14.

The annular clamp 15 here has two, substantially semicircular elements 15a, 15b, which are held together by two bolts 16 acting in a tangential direction. In other examples the annular clamp is divided into more than two sections, e.g. three sections which together form the annular ring. Also, one or more of the sections may be joined by hinges instead of bolts. For example, the illustrated example, one of the bolts 16 may be replaced by a hinge.

A tapered groove 17 in the clamp elements 15a and 15b engages the outer rim 18 of the attachment collar 12 and the outer rim 19 of the tank nozzle 13. When the clamp 15 is secured by the tightening the bolts 16, the annular clamp 15 ensures a fixed position of the annular opening of the attachment collar 12 with respect to the annular opening of the tank nozzle 13. A sealing gasket (not shown in figure 4) is sandwiched between the rim 18 of the attachment collar 12 and the rim 19 of the nozzle 13. The gasket is made of a material approved for use in hygienic applications, such as rubber or a softened plastic, e.g. PTFE.

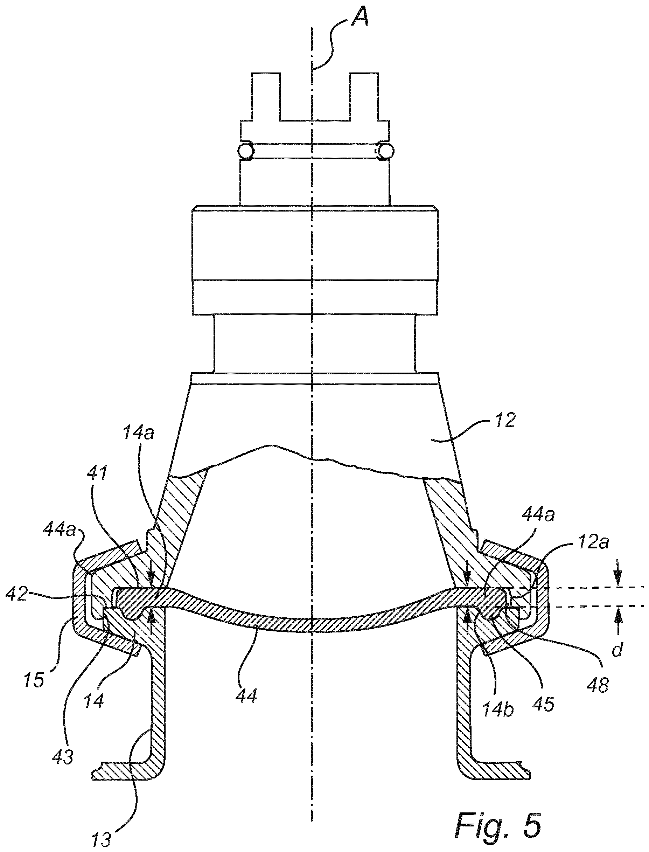

Figure 5 shows, in more detail, the attachment of the non-contact RLG in figure 2, according to a first embodiment of the present invention.

The attachment collar 12 of the RLG housing is formed with an annular sealing surface 41, surrounded by an annular abutment surface 42. Both the sealing surface 41 and the abutment surfaces extend substantially in a plane normal to the axial direction A. The abutment surface 42 is axially displaced towards the nozzle 13, i.e. it is positioned axially distal with respect to the housing 10. When the attachment collar 12 is mounted on the nozzle 13, the abutment surface 42 will therefore be brought into contact with, and rest upon, the flange 14. This ensures a pre-determined axial distance d between the flange surface 14a and the sealing surface 41.

Radially outside the abutment surface 42, and surrounding it, is a ridge 43 extending axially towards the nozzle 13. The ridge 43 may be continuous, but may alternatively be formed of discrete portions. As the nozzle 12 abuts the abutment surface 42, the flange 14 is received within the ridge 43, so that the ridge 43 will surround the flange 14 and secure it in a radial position.

The rubber gasket is here a rubber disc 44 extending across the entire cross-section of the opening of the attachment collar 12. The outer perimeter 44a of the rubber disc 44 is sandwiched between the surface 14a of the flange 14 and the sealing surface 41. The perimeter 44a of the rubber disc 44 has a thickness to ensure satisfactory sealing when it is compressed to the predetermined distance d. The rubber disc 44 further has an annular protrusion 45, formed to be received by an annular groove 14b in the tri-clamp flange 14.

At normal temperature, the disc 44 has a diameter which is smaller than the area defined by the inner surface 12a of the attachment collar 12, illustrated in figure 5 by a gap 48. This allows for thermal expansion of the disc 44 at elevated temperatures, without impairing the sealing.

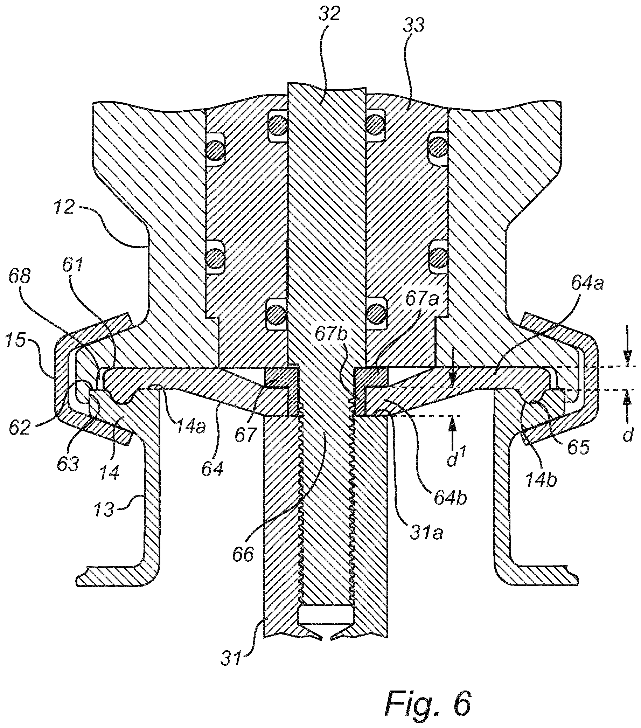

Figure 6 shows, in more detail, the attachment of the GWR RLG in figure 3 according to a second embodiment of the invention.

Similar to figure 5, the attachment collar 12' has a sealing surface 61, an abutment surface 62, and a ridge 63. Also in this case, the flange 14 is received within the ridge 63 and abuts the abutment surface 61, such that the flange 14 is secured radially and axially.

The outer perimeter 64a of a rubber gasket 64 is sandwiched between the surface 14a of the flange 14 and the sealing surface 61. The perimeter 64a of the gasket 64 has a thickness to ensure satisfactory sealing when it is compressed to the predetermined distance d. The gasket 64 further has an annular protrusion 65, formed to be received by the annular groove 14b in the tri-clamp flange 14.

In this case, however, the rubber gasket 64 is annular in shape, and is provided with a central opening 66 through which the central probe connector 32 is allowed to extend. A metal sleeve 67 is arranged around the central connector 32, on the RLG side of the gasket 64. The sleeve 67 has a base 67a making contact with the sleeve of the probe connection, and a neck portion 67b extending axially along the central connector 32. When the probe 31 is attached to the central connector 32 (typically by a threaded connection) the inner perimeter 64b of the gasket 64 is sandwiched between the base 67a of the sleeve and the upper (RLG-facing) surface 31a of the probe 31. The neck portion 67b ensures a predefined distance d' between the surface 31a and the base 67a. The inner perimeter 64b of the gasket 64 has a thickness to ensure satisfactory sealing when it is compressed to the predetermined distance d'.

Similar to the rubber disc in figure 5, there is (at normal temperatures) a gap 68 between the gasket 64 and the inner surface 12a of the collar 12, to allow for thermal expansion.

The person skilled in the art realizes that the present invention by no means is limited to the preferred embodiments described above. On the contrary, many modifications and variations are possible within the scope of the appended claims, which generally relate to the mounting principle. For example, in the case of a radar level gauge the details of the level detection may be different than those discussed above. Further, the physical design of the gauging instrument may be any type which is compatible with an attachment collar according to the invention.

## Claims

1. A gauging instrument (1) adapted for mounting on a nozzle (13) of a tank, said nozzle provided with a tri-clamp flange (14),
said instrument comprising an attachment collar (12) with an opening configured to be aligned with the nozzle and to be secured by means of an annular clamping device (15);
wherein
said attachment collar includes:
an annular sealing surface (41),
**characterized in that** said attachment collar includes: an annular abutment surface (42) located radially outside said sealing surface (41) and configured to abut an outer periphery of the tank nozzle, and
a ridge (43) located radially outside said abutment surface; and **in that** the gauging instrument further comprises a sealing gasket (44) fitted radially inside said abutment surface; such that, when the gauging instrument is mounted on a tri-clamp flange (14) of a tank nozzle, said ridge (43) surrounds the outer periphery of the tri-clamp flange to thereby ensure radial alignment, said annular abutment surface (42) abuts the periphery of the tank nozzle (13) to ensure a precisely defined axial relation, and the sealing gasket (44) is sandwiched between said sealing surface (41) and the tri-clamp flange (14).

2. The gauging instrument according to claim 1, wherein the annular clamping device (15) is a tri-clamp.

3. The gauging instrument according to claim 1 or 2, wherein the nozzle flange (14) is provided with an annular groove (14b), and wherein the sealing gasket (44) comprises an annular protrusion (45) configured to be received in said groove.

4. The gauging instrument in one of the preceding claims, wherein the sealing gasket is made of rubber.

5. The gauging instrument in one of the preceding claims, wherein a gap (48) is formed radially outside the sealing gasket.

6. The gauging instrument according to claim 1, wherein the gauging instrument is a radar level gauge and further comprises:
a transceiver (6) configured to generate and transmit an electromagnetic transmit signal and to receive an electromagnetic return signal;
a signal propagation device (21,31) arranged to allow propagation of the electromagnetic transmit signal from said transceiver towards a surface of a product in said tank and arranged to provide the transceiver with a return signal resulting from reflection of said electromagnetic transmit signal at said surface; and
processing circuitry (7) connected to said transceiver for determining said filling level based on a relationship between said electromagnetic transmit signal and said electromagnetic return signal.

7. The gauging instrument according to claim 6, wherein said signal propagation device is a directional antenna, and wherein said attachment collar (12) is formed by an opening of said antenna, and wherein said sealing gasket (44) covers an entire cross section of said antenna opening, at least a central area of said sealing gasket being permeable to said electromagnetic transmit and return signals.

8. The gauging instrument according to claim 6, wherein said signal propagation device is a guided wave probe, and wherein said sealing gasket (44) is annular, and has a central opening for electrical connection of said guided wave probe.

9. The gauging instrument according to claim 8, further comprising a probe connection comprising a dielectric sleeve (33) suspended in the attachment collar, and a probe connector (32) suspended in said sleeve, said probe connector extending through said annular sealing gasket, wherein said probe is connectable to said probe connector so as to sandwich an inner edge of said annular sealing gasket (44) between the dielectric sleeve (33) and an end of said probe facing the gasket.

10. The gauging instrument according to any one of claims 1 - 5, wherein the gauging instrument is a pressure gauge or an ultrasonic gauge.

## Patentansprüche

1. Messinstrument (1), das zum Montieren auf einem Stutzen (13) eines Tanks ausgelegt ist, wobei der Stutzen mit einem Dreifachklemmen-Flansch (14) versehen ist, wobei das Instrument einen Anbringungskragen (12) mit einer Öffnung umfasst, die eingerichtet ist, um mit dem Stutzen ausgerichtet zu sein und mittels einer ringförmigen Klemmvorrichtung (15) befestigt zu sein;
wobei der Anbringungskragen aufweist:
eine ringförmige Dichtungsfläche (41),
**dadurch gekennzeichnet, dass** der Anbringungskragen aufweist:
eine ringförmige Anlagefläche (42), die sich radial außerhalb der Dichtungsfläche (41) befindet und eingerichtet ist, um an einem äußeren Umfang des Tankstutzens anzuliegen, und
einen Steg (43), der sich radial außerhalb der Anlagefläche befindet;
und darin, dass das Messinstrument ferner einen Dichtungsring (44) umfasst, der radial innerhalb der Anlagefläche angebracht ist;
sodass, wenn das Messinstrument auf einem Dreifachkemmen-Flansch eines Tankstutzens (14) montiert ist, der Steg (43) den äußeren Umfang des Dreifachklemmen-Flansches umgibt, um dadurch eine radiale Ausrichtung sicherzustellen, wobei die ringförmige Anlagefläche (42) an dem Umfang des Tankstutzens (13) anliegt, um eine genau definierte axiale Beziehung sicherzustellen, und wobei der Dichtungsring (44) zwischen der Dichtungsfläche (41) und dem Dreifachklemmen-Flansch (14) sandwichartig eingeschlossen ist.

2. Messinstrument nach Anspruch 1, wobei die ringförmige Klemmvorrichtung eine Dreifachklemme (15) ist.

3. Messinstrument nach Anspruch 1 oder 2, wobei der Stutzenflansch (14) mit einer ringförmigen Nut (14b) versehen ist und wobei der Dichtungsring (44) einen ringförmigen Vorsprung (45) umfasst, der eingerichtet ist, um in der Nut aufgenommen zu sein.

4. Messinstrument nach einem der vorhergehenden Ansprüche, wobei der Dichtungsring aus Kautschuk hergestellt ist.

5. Messinstrument nach einem der vorhergehenden Ansprüche, wobei radial außerhalb des Dichtungsrings ein Spalt (48) gebildet ist.

6. Messinstrument nach Anspruch 1, wobei das Messinstrument ein Radarfüllstandsanzeiger ist und ferner umfasst:
einen Sendeempfänger (6), der eingerichtet ist, um ein elektromagnetisches Sendesignal zu erzeugen und zu senden und ein elektromagnetisches Reflexionssignals zu empfangen;
eine Signalausbreitungsvorrichtung (21, 31), die angeordnet ist, um eine Ausbreitung des elektromagnetischen Sendesignals von dem Sendeempfänger hin zu einer Oberfläche eines Produkts in dem Tank zu ermöglichen, und angeordnet ist, um dem Sendeempfänger ein Rücksignal zu liefern, das sich aus einer Reflexion des elektromagnetischen Sendesignals an der Oberfläche ergibt; und
eine Verarbeitungsschaltungsanordnung (7), die mit dem Sendeempfänger verbunden ist, um den Füllstand basierend auf einer Beziehung zwischen dem elektromagnetischen Sendesignal und dem elektromagnetischen Rücksignal zu bestimmen.

7. Messinstrument nach Anspruch 6, wobei die Signalausbreitungsvorrichtung eine Richtantenne ist, und wobei der Anbringungskragen (12) durch eine Öffnung der Antenne gebildet ist, und wobei der Dichtungsring (44) einen gesamten Querschnitt der Antennenöffnung abdeckt, wobei zumindest ein zentraler Bereich des Dichtungsrings für das elektromagnetische Sende- und Rücksendesignal durchlässig ist.

8. Messinstrument nach Anspruch 6, wobei die Signalausbreitungsvorrichtung eine Sonde mit geführten Wellen ist, und
wobei der Dichtungsring (44) ringförmig ist und eine zentrale Öffnung für den elektrischen Anschluss der Sonde mit geführten Wellen aufweist.

9. Messinstrument nach Anspruch 8, ferner umfassend einen Sondenanschluss, der eine dielektrische Hülse (33), die in dem Anbringungskragen aufgehängt ist, und einen Sondenverbinder (32), der in der Hülse aufgehängt ist, umfasst, wobei sich der Sondenverbinder durch den ringförmigen Dichtungsring hindurch erstreckt, wobei die Sonde mit dem Sondenverbinder verbindbar ist, um einen inneren Rand des ringförmigen Dichtungsrings (44) zwischen der dielektrischen Hülse (33) und einem Ende der Sonde, das dem Dichtungsring zugewandt ist, sandwichartig einzuschließen.

10. Messinstrument nach einem der Ansprüche 1 - 5, wobei das Messinstrument ein Druckmesser oder ein Ultraschallmesser ist.

## Revendications

1. Instrument de jaugeage (1) adapté pour être monté sur une buse (13) d'un réservoir, ladite buse étant dotée d'un raccord tri-clamp (14),
ledit instrument comprenant un collier de fixation (12) doté d'une ouverture configurée pour être alignée avec la buse et fixée au moyen d'un dispositif de serrage annulaire (15) ;
dans lequel ledit collier de fixation inclut :
une surface d'étanchéité annulaire (41),
**caractérisé en ce que** ledit collier de fixation inclut :
une surface de butée annulaire (42) située radialement à l'extérieur de ladite surface d'étanchéité (41) et configurée pour buter contre une périphérie extérieure de la buse de réservoir, et
une nervure (43) située radialement à l'extérieur de ladite surface de butée ;
et dans lequel l'instrument de jaugeage comprend en outre un joint d'étanchéité (44) ajusté radialement à l'intérieur de ladite surface de butée ;
de telle façon que lorsque l'instrument de jaugeage est monté sur un raccord tri-clamp (14) d'une buse de réservoir, ladite nervure (43) entoure la périphérie extérieure du raccord tri-clamp pour ainsi assurer un alignement radial, ladite surface de butée annulaire (42) bute contre la périphérie de la buse de réservoir (13) pour assurer une relation axiale définie avec précision, et le joint d'étanchéité (44) est pris en sandwich entre ladite surface d'étanchéité (41) et le raccord tri-clamp (14).

2. Instrument de jaugeage selon la revendication 1, dans lequel le dispositif de serrage annulaire (15) est un tri-clamp.

3. Instrument de jaugeage selon la revendication 1 ou 2, dans lequel le raccord de buse (14) est doté d'une rainure annulaire (14b), et dans lequel le joint d'étanchéité (44) comprend une saillie annulaire (45) configurée pour être reçue dans ladite rainure.

4. Instrument de jaugeage selon l'une des revendications précédentes, dans lequel le joint d'étanchéité est constitué de caoutchouc.

5. Instrument de jaugeage selon l'une des revendications précédentes, dans lequel un espace (48) est formé radialement à l'extérieur du joint d'étanchéité.

6. Instrument de jaugeage selon la revendication 1, dans lequel l'instrument de jaugeage est une jauge de niveau à radar et comprend en outre :
un émetteur-récepteur (6) configuré pour générer et émettre un signal d'émission électromagnétique et pour recevoir un signal de retour électromagnétique ;
un dispositif de propagation de signal (21, 31) conçu pour permettre la propagation du signal d'émission électromagnétique à partir dudit émetteur-récepteur vers une surface d'un produit dans ledit réservoir et conçu pour fournir à l'émetteur-récepteur un signal de retour électromagnétique résultant de la réflexion dudit signal d'émission électromagnétique au niveau de ladite surface ; et
un circuit de traitement (7) connecté audit émetteur-récepteur pour la détermination dudit niveau de remplissage sur la base d'une relation entre ledit signal d'émission électromagnétique et ledit signal de retour électromagnétique.

7. Instrument de jaugeage selon la revendication 6, dans lequel ledit dispositif de propagation est une antenne directionnelle, et dans lequel ledit collier de fixation (12) est formé par une ouverture de ladite antenne, et dans lequel ledit joint d'étanchéité (44) recouvre une section transversale entière de ladite ouverture d'antenne, au moins une zone centrale dudit joint d'étanchéité étant perméable auxdits signaux d'émission et de retour électromagnétiques.

8. Instrument de jaugeage selon la revendication 6, dans lequel ledit dispositif de propagation est une sonde à ondes guidées, et dans lequel ledit joint d'étanchéité (44) est annulaire et comporte une ouverture centrale pour la connexion électrique de ladite sonde à ondes guidées.

9. Instrument de jaugeage selon la revendication 8, comprenant en outre une connexion de sonde comprenant un manchon diélectrique (33) suspendu dans le collier de fixation, ainsi qu'un connecteur de sonde (32) suspendu dans ledit manchon, ledit connecteur de sonde s'étendant à travers ledit joint d'étanchéité annulaire, dans lequel ladite sonde peut être connectée audit connecteur de sonde de manière à prendre en sandwich un bord intérieur dudit joint d'étanchéité annulaire (44) entre le manchon diélectrique (33) et une extrémité de ladite sonde tournée vers le joint.

10. Instrument de jaugeage selon l'une quelconque des revendications 1 à 5, dans lequel l'instrument de jaugeage est une jauge de pression ou une jauge ultrasonique.
